# EUROPÄISCHE PATENTSCHRIFT

(11) **EP 1 263 520 B1**
(45) Veröffentlichungstag und Bekanntmachung des Hinweises auf die Patenterteilung: **03.01.2007**
(21) Anmeldenummer: 01967130.4
(22) Anmeldetag: 07.07.2001
(51) Int. Cl.: B01D 53/94

(54) **VERFAHREN ZUR UMWANDLUNG EINES FESTEN STICKSTOFFHALTIGEN REDUKTIONSMITTELS IN EINE GASPHASE FÜR DIE REDUKTION VON STICKOXIDEN IN ABGASEN**
METHOD OF CONVERTING A SOLID NITROGEN-CONTAINING REDUCING AGENT TO THE GAS PHASE FOR USE IN THE REDUCTION OF NITROGEN OXIDES IN EXHAUST GASES
PROCEDE PERMETTANT DE TRANSFORMER UN AGENT DE REDUCTION AZOTE SOLIDE EN PHASE GAZEUSE POUR REDUIRE LES OXYDES D'AZOTE DES GAZ D'ECHAPPEMENT

(30) Priorität: 13.01.2001 DE 10101364
(43) Veröffentlichungstag der Anmeldung: 11.12.2002
(73) Patentinhaber: FEV Motorentechnik GmbH, 52078 Aachen (DE)
(72) Erfinder: HERNIER, Manuel, Markus, 41189 Mönchengladbach (DE)
(74) Vertreter: Maxton Langmaack & Partner
(86) Internationale Anmeldenummer: PCT/EP2001/007826
(87) Internationale Veröffentlichungsnummer: WO 2002/055180

(56) Entgegenhaltungen:
- WO-A-00/66252
- US-A- 6 110 435

## Beschreibung

Die Erfindung betrifft ein Verfahren zur Erzeugung eines gasförmigen Reduktionsmittels für die Reduktion von Stickoxiden in sauerstoffhaltigen Abgasen aus einem festen Reduktionsmittel.

Die katalytische Nachbehandlung von sauerstoffhaltigen Abgasen von Verbrennungsmotoren zur Reduzierung der NOₓ-Emission erfordert eine sogenannte selektive katalytische Reduktion, die es ermöglicht, im Abgas mit den Stickoxiden, d. h. NO und NO₂ molekularen Stickstoff (N₂), Kohlendioxid (CO₂) und Wasser zu bilden, und zwar bei Dieselmotoren, aber auch bei Ottomotoren mit Kraftstoffdirekteinspritzung. Dies geschieht durch die Zufuhr von Reduktionsmitteln, die jedoch hinsichtlich der Zudosierung in den geforderten kleinen Mengen bei hochdynamisch betriebenen Verbrennungsmotoren im mobilen Einsatz mit schwankendem Stickoxidausstoß schwierig ist.

Nach DE-A-198 45 944 ist es bekannt, ein als Feststoff vorliegendes Reduktionsmittel unter wärmeeinwirkung in seine Gasform umzusetzen und dann das Gas in Abhängigkeit von den betrieblichen Anforderungen in eine Reaktionskammer einzudosieren und durch weitere Wärmeeinwirkung in seine reduktiven Produkte zu zerlegen, die dann den zu reduzierenden Abgas vor dem Katalysator zugemischt werden. Dieses Verfahren hat den Vorteil, daß das feste Reduktionsmittel in der ersten Stufe unter Temperatureinfluß nur der physikalischen Umsetzung "Feststoff in Gas" unterworfen wird, so daß beim Abkühlen durch Kondensation das gasförmige Reduktionsmittel wieder feste Form annimmt. Nur die zu dosierende und betrieblich benötigte Menge an Reduktionsmittel wird anschließend thermisch in seine reduzierenden Bestandteile zerlegt, die dann bei der katalytischen Reduktion wirksam werden können.

Die in der zweiten Stufe erfolgende Zerlegung des gasförmigen Reduktionsmittels in seine reduktiven bzw. reaktiven Bestandteile, die dann ebenfalls in Gasform vorliegen, ist jedoch bei der Abkühlung nicht mehr rückgängig zu machen, so daß nach dem Kondensieren eine erneute Erhitzung zwar zu einer Verdampfung führt, jedoch aufgrund von Polymerisationsvorgängen die Reaktivität praktisch verloren gegangen ist. Dieses vorbekannte Verfahren eignet sich besonders für Cyanursäure und/oder Melamin und/oder Harnstoff und/oder Biuret und/oder Triuret und/oder andere stickstoffhaltige Reduktionsmittel, einzeln oder in Mischungen, die nach vollzogenem Phasenwechsel von "fest" zu "gasförmig" sich bei weiterer Energiezufuhr in reduktive Produkte zerlegen lassen.

Bei der Verwendung von festen stickstoffhaltigen Reduktionsmitteln, die bereits während der Verdampfung direkt in reduktive bzw. reaktive Bestandteile, insbesondere Ammoniak (NH₃) zersetzt werden, aber auch Ammoniumcarbamat, Ammoniumsalze, wie Ammoniumcarbonat sowie Ammonium-Formiate oder Ammoniumacetate und Ammonium-Propionate, sind aufgrund ihres niedrigen Energiebedarfs für eine Verdampfung für diese Einsatzzwecke interessant.

Das Problem bei der Verdampfung dieser festen Reduktionsmittel besteht vor allem darin, daß die Einleitung von Wärmeenergie aus der Heizeinrichtung in den zu verdampfenden Feststoff hinsichtlich der Höhe der Verdampfungstemperatur schwierig zu führen ist. Hier ist insbesondere das Problem zu berücksichtigen, daß die Verdampfungstemperatur relativ genau eingestellt werden muß, da schon bei einem nur geringen Überschreiten der Verdampfungstemperatur bei den hier in Betracht kommenden, als Reduktionsmittel geeigneten Feststoffen Polymerisationsvorgänge im Feststoff ablaufen, so daß diese polymerisierten Feststoffanteile bei der anschließenden Umsetzung in ein Gas ihre Reaktivität praktisch verloren haben.

Bei der Erhitzung des reduktiven Feststoffs durch den Kontakt mit einer festen Wärmeübertragungsfläche ergeben sich neben dem unvermeidlichen Temperatursprung im Spalt zwischen zwei Körpern mit unterschiedlicher Temperatur noch zusätzlich die "wärmeisolierenden" Eigenschaften des an der Kontaktfläche zwischen der Heizfläche und dem aufzuheizenden reduktiven Feststoff entstehenden reaktiven Gases, die eine erhöhte Temperaturlage der heizenden Kontaktfläche erforderlich machen. Damit besteht aber zumindest bei einer Reihe von einsetzbaren Reduktionsmitteln die Gefahr einer "Überhitzung", d. h. die für eine Verdampfung einzuhaltende maximale Temperatur wird zwangsläufig überschritten, so daß die vorbeschriebenen nachteiligen Polymerisationsvorgänge eintreten. Dies gilt sowohl für Reduktionsmittel, die verdampft werden und bei denen anschließend der Dampf durch weitere Energiezufuhr in reaktive Bestandteile umgesetzt wird, als auch für solche festen Reduktionsmittel, bei denen durch die Erwärmung unmittelbar direkt reduktiven Bestandteile wie beispielsweise Ammoniak durch Zersetzung des festen Reduktionsmittels freigesetzt werden.

Der Erfindung liegt die Aufgabe zugrunde, ein Verfahren zu schaffen, das eine sehr viel genauere Temperaturführung und damit eine wesentlich bessere Ausbeute an reduktiven Bestandteilen bei der Erhitzung eines festen Reduktionsmittels ermöglicht.

Bei einem Verfahren zur Erzeugung eines gasförmigen Reduktionsmittels für die Reduktion von Stickoxiden in sauerstoffhaltigen Abgasen, insbesondere Abgasen von Verbrennungsmotoren, die einer selektiv-katalytischen Nachbehandlung in einem Katalysator unterzogen werden, ist es gemäß der Erfindung vorgesehen, ein festes Reduktionsmittel mit einem flüssigen Wärmetträgermittel in Kontakt zu bringen, das auf eine Heiztemperatur erhitzt wird, die im Bereich der Verdampfungstemperatur des Reduktionsmittels liegt.

Der gemäß der Erfindung vorgesehene Kontakt zwischen einem heißen flüssigen Wärmeträgermittel und dem zu verdampfenden festen Reduktionsmittel hat den Vorteil eines wesentlich besseren Kontaktes zwischen dem Heizmedium und der aufzuheizenden Kontaktfläche am Feststoff und damit einer intensiveren Übertragung der Wärme auf das feste Reduktionsmittel, so daß eine wesentlich genauere Temperaturführung möglich ist. Ein weiterer Vorteil besteht darin, daß über das flüssige Wärmeträgermittel die sich bildenden gasförmigen Bestandteile sehr viel schneller und einfacher von der Kontaktfläche absetzen, so daß die "wärmeisolierende" Wirkung der entstehenden Gase zwischen dem flüssigen Wärmeträgermittel einerseits und der Kontaktfläche des festen Reduktionsmittels andererseits deutlich reduziert wird. Ein weiterer Vorteil des erfindungsgemäßen Verfahrens besteht darin, daß bei der Verwendung eines flüssigen Wärmeträgermittels der Kontakt zwischen dem heißen Wärmeträgermittel und dem zu vergasenden festen Reduktionsmittel praktisch "geschaltet" werden kann, da der Verdampfungsvorgang nahezu unmittelbar mit Beginn des Kontaktes zwischen dem Wärmeträgermittel und dem festen Reduktionsmittel eingeleitet und bei Beendigung des Kontaktes aufhört. Demgegenüber ist die Verwendung einer festen Heizfläche wesentlich träger, da zum einen die Heizfläche selbst aufgeheizt werden muß und zum anderen infolge der nicht zu vermeidenden Speicherwirkung des Materials einer festen Heizfläche auch nach dem Abschalten der Heizenergie, beispielsweise eines Heizstromes, noch über einen gewissen Zeitraum die Verdampfung weitergeführt wird. Dies ist dann der Fall, wenn über entsprechende Vorrichtungsmaßnahmen neben einem Anschalten und Abschalten der Heizenergie auch noch das in Form eines Preßkörpers vorliegende Reduktionsmittel jeweils beim Einschalten der Heizenergie an die Heizfläche angedrückt und beim Abschalten der Heizenergie von der Heizfläche abgezogen wird. Wegen des hohen apparativen Aufwandes für eine derartige Maßnahme kann die verbleibende Strahlungswärme nach dem Abheben von der Heizfläche nicht ganz unterbunden werden.

Erfingungsgemäß ist vorgesehen, daß ein Wärmetauschermittel verwendet wird, dessen Verdampfungstemperatur über der für die Verdampfung des Reduktionsmittels notwendigen Heiztemperatur liegt. Dadurch ist gewährleistet, daß das Wärmeträgermittel immer in flüssiger Form vorliegt. Von Bedeutung ist hierbei, daß ein Wärmeträgermittel verwendet wird, in dem das zu verdampfende bzw. zu vergasende Reduktionsmittel allenfalls geringfügig lösbar ist. Die hierfür erforderlichen Paarungen Reduktionsmittel-Wärmeträgermittel richten sich im wesentlichen nach dem zu verdampfenden Reduktionsmittel.

Während es grundsätzlich möglich ist, den Kontakt zwischen dem Reduktionsmittel und dem Wärmeträgermittel über ein rieselfähiges Reduktionsmittel zu erzeugen, das in das Wärmeträgermittel eindosiert wird, ist in zweckmäßiger Ausgestaltung der Erfindung vorgesehen, das Reduktionsmittel als Preßkörper einzusetzen, dessen Oberfläche zumindest zum Teil als Kontaktfläche für das heiße Wärmeträgermittel dient. Dadurch wird das Verfahren erheblich vereinfacht, da die Dosierung des zu erzeugenden reduktiven Gases über die Kontaktzeit zwischen einer vorgegebenen Kontaktfläche des als Preßkörper vorliegenden Reduktionsmittels und in dem Wärmeträgermittel möglich ist und zwar über die Bemessung der pro Zeiteinheit zugeführten Menge des auf eine vorgegebene Temperatur aufgeheizten Wärmeträgermittels, da hierüber die pro Zeiteinheit zugeführte Wärmeenergie vorgebbar ist.

In einer Ausgestaltung der Erfindung ist vorgesehen, daß das heiße Wärmeträgermittel die Kontaktfläche am Preßkörper umspült. Dies kann beispielsweise durch ein Überströmen der Kontaktfläche oder aber durch ein Eintauchen der Kontaktfläche in ein entsprechendes Bad erfolgen.

In einer anderen Ausgestaltung der Erfindung ist vorgesehen, daß das heiße Wärmeträgermittel auf die Kontaktfläche als Strahl aufgebracht wird. Diese Anordnung hat den Vorteil, daß der sich auf der Kontaktfläche verteilende Strahl des heißen Wärmeträgermittels unmittelbar einen relativ dünnen Film auf der Kontaktfläche bildet, der zum einen seine Wärmeenergie auf das Reduktionsmittel überträgt und zum anderen die entstehenden Gas- bzw. Dampfblasen sofort durchläßt, so daß sich zwischen dem heißen Wärmeträgermittel und der Kontaktfläche keine durchgehende Dampfschicht bilden kann. Hinzu kommt noch, daß die durch den Strömungsvorgang bewirkte Verwirbelung des heißen Wärmeträgermittels auf der Kontaktfläche die im Wärmeträgermittel enthaltene Wärmeenergie nahezu vollständig auf die Kontaktfläche übertragen wird.

Anstelle des Aufbringens durch einen Vollstrahl, wie vorstehend beschrieben, ist es auch möglich, daß das heiße Wärmeträgermittel als Sprühstrahl auf die Kontaktfläche aufgebracht wird. Durch das tropfenförmige Auftreffen des heißen Wärmeträgermittels auf die Kontaktfläche, und zwar auf wechselnden Auftreffpunkten, ist eine praktisch zeitgleiche Abfuhr des entstehenden Gases bzw. Dampfes gewährleistet.

In zweckmäßiger Ausgestaltung der Erfindung ist vorgesehen, daß das erzeugte gasförmige Reduktionsmittel in einem Gassammelraum gehalten und aus diesem dosiert in den zu behandelnden Abgasstrom eingeleitet wird. Das Vorhandensein eines Gassammelraums erlaubt es ferner, bei einem Stillsetzen auskondensierende, nur noch ungenügend reaktive Feststoffe abzuscheiden und aus dem Verfahren zu entfernen. Dies ist insbesondere dann in einfacher Weise möglich, wenn die Wandungen des Gassammelraums infolge des Verdampfungsvorganges mit dem Wärmeträgermittel benetzt werden. Der sich auf den Wandungen des Gassammelraums absetzende Wärmeträgermittelfilm verhindert ein Anbacken auskondensierender Feststoffe.

In Ausgestaltung der Erfindung ist vorgesehen, daß das Wärmeträgermittel mittels einer Pumpe über einen Erhitzer, die Kontaktfläche und einen Auffangraum im Kreislauf gefördert wird. Eine Kreislaufführung hat den Vorteil, daß mit nur geringen Mengen an Wärmeträgermitteln gearbeitet werden kann, wobei es zweckmäßig ist, wenn die Kreislaufführung im Kontaktbereich zwischen dem Wärmeträgermittel und dem festen Reduktionsmittel einen Bypaß vorsieht, so daß das Wärmeträgermittel in erhitztem Zustand auch dann im Kreislauf geführt werden kann, wenn kein Bedarf an gasförmigem reaktiven Reduktionsmittel vorhanden ist, aber das System in Betriebsbereitschaft gehalten werden muß. Damit ist eine gute Regelbarkeit mit kurzer Ansprechzeit für das System gegeben, da durch Zu- und Abschalten des Bypasses jeweils der Kontakt mit dem festem Reduktionsmittel ermöglicht oder verhindert wird. Dadurch, daß nur eine geringe Menge an Wärmeträgermittel im Kreislauf zu führen ist, ergibt sich auch ein geringer Verbrauch an Wärmeenergie während eines derartigen Zeitraumes der Betriebsbereitschaft.

In weiterer Ausgestaltung der erfindungsgemäßen Verfahrens ist vorgesehen, daß die Förderleistung der Pumpe und/oder die Heizleistung des Erhitzers und/oder die dem zu reinigenden Abgas zuzudosierende Reduktionsgasmenge mittels einer Steuereinrichtung regelbar ist. Eine derartige Steuereinrichtung, die vorzugsweise in die Motorsteuereinrichtung integriert ist, bietet die Möglichkeit, die Erzeugung und die mengenmäßige Zudosierung des gasförmigen Reduktionsmittels last- und auch betriebsabhängig auch für geringe Gasmengen zu regeln. Durch die unterschiedlichen Eingriffsmöglichkeiten, beispielsweise im Bereich der Förderleistung der Pumpe, ist eine Regulierung der Zufuhr an Wärmeenergie bei gegebenem Temperaturniveau des Wärmeträgermittels für eine benötigte Gasmenge möglich. Durch eine entsprechende Änderung der Heizleistung des Erhitzers kann zum einen die beim Verdampfungsvorgang abgenommene Wärmeenergie wieder zugeführt werden, andererseits bei Betriebsbereitschaftszeiten die Heizleistung so eingestellt werden, daß nur die nicht zu vermeidenden Wärmeverluste des Systems ausgeglichen werden. Über die Ansteuerung einer entsprechenden Dosiereinrichtung, insbesondere eines Ventils am Gassammelraum, kann die dem zu reinigenden Abgas zuzuführende gasförmige Reduktionsmittelmenge dosiert werden. Über die Öffnungszeit des Ventils einerseits und einer Erfassung des Gasdrucks im Gassammelraum andererseits ist hier eine sehr genaue Dosierung möglich. Da es sich insgesamt um ein komplexes System handelt, sind die einzelnen Regel- und Steuerparameter in der Steuereinrichtung zweckmäßigerweise miteinander zu verknüpfen, so daß durch eine Überlagerung der unterschiedlichen Regeleingriffe eine optimale Mengendosierung möglich ist. Eine Optimierung ist über Kennfelder möglich, die in der Steuereinrichtung abgelegt sind.

In Ausgestaltung der Erfindung und zur Durchführung des erfindungsgemäßen Verfahrens ist ferner eine Einrichtung zur Erzeugung eines gasförmigen Reduktionsmittels zur Reduktion von Stickoxiden in sauerstoffhaltigen Abgasen, insbesondere Abgasen von Verbrennungsmotoren, die einer selektiv-katalytischen Nachbehandlung unterzogen werden vorgesehen, mit einem druckdicht verschließbaren Aufnahmebehälter für ein festes Reduktionsmittel, mit einer Pumpe, die mit ihrer Saugseite und ihrer Druckseite mit dem Aufnahmebehälter in Verbindung steht und durch die ein flüssiges Wärmeträgermittel im Kreislauf umgepumpt wird, ferner mit einem der Pumpe zugeordneten Erhitzer für das Wärmeträgermittel sowie mit Mitteln, die das heiße Wärmeträgermittel mit dem festen Reduktionsmittel in Kontakt bringen, und mit einem steuerbaren Dosierventil zur Einleitung des erzeugten gasförmigen Reduktionsmittels in das Abgasstrom. Das feste Reduktionsmittel kann in rieselförmiger Form vorliegen. Besonders zweckmäßig ist jedoch die Verwendung in Form eines Preßkörpers.

Zweckmäßig ist es, wenn gemäß der Erfindung die Pumpe und/oder der Erhitzer und/oder das Dosierventil mit einer Steuereinrichtung zur Regelung der jeweiligen Leistungen in Abhängigkeit von der jeweiligen Motorleistung in Verbindung steht.

In einer Ausgestaltung der Erfindung ist vorgesehen, daß zumindest ein Teil der Preßkörperoberfläche in das wärmeträgermittel eintauchbar angeordnet ist. Diese Anordnung bietet die Möglichkeit, im Aufnahmebehälter ein Bad des Wärmeträgermittels vorzusehen, in das der feste Reduktionsmittelkörper mehr oder weniger eingetaucht wird, so daß über die jeweils vom Wärmeträgermittel umspülte, als Kontaktfläche dienende Oberfläche des Reduktionsmittelkörpers die Erzeugung des gasförmigen Reduktionsmittel variiert werden kann. Das Wärmeträgermittel wird im Kreislauf von der Pumpe über den Erhitzer in das Bad geführt, so daß zum einen die für eine Verdampfung des eingesetzten Reduktionsmittels notwendige Heiztemperatur aufrechterhalten und bei einem Verdampfen des Reduktionsmittels die verbrauchte Wärmeenergie über den Erhitzer wieder dem Bad zugeführt werden kann.

In einer anderen vorteilhaften Ausgestaltung der Erfindung ist vorgesehen, daß die Pumpe druckseitig über eine Druckleitung mit dem Aufnahmebehälter verbunden ist, deren Ausströmöffnung gegen die Preßkörperoberfläche ausgerichtet und als Düse ausgebildet ist. Je nach Ausbildung der Düse kann die Preßkörperoberfläche mit einem Vollstrahl oder mit einem Sprühstrahl vom Wärmeträgermittel beaufschlagt werden.

In zweckmäßiger Ausgestaltung der Erfindung ist ferner vorgesehen, daß die Pumpe saugseitig mit einem dem Aufnahmebehälter zugeordneten gesonderten Auffangraum für das wärmeträgermittel verbunden ist. Diese Maßnahme ermöglicht eine einfache Trennung zwischen dem flüssigen Wärmeträgermittel und dem erzeugten gasförmigen Reduktionsmittel. Durch entsprechende Einbauten kann hierbei verhindert werden, daß über das gasförmige Reduktionsmittel Tropfen des Wärmeträgermittels aus dem Aufnahmeraum ausgetragen werden.

Der nachstehenden schematischen Darstellung und der zugehörigen Beschreibung von Ausführungsbeispielen sind weitere Merkmale der Erfindung zu entnehmen. Die Zeichnungen zeigen
- Fig. 1: ein Schaltbild einer Kolbenbrennkraftmaschine mit einer Reinigung der Abgase nach dem Prinzip der selektiven katalytischen Reduktion,
- Fig. 2: eine Ausführungsform zur Verdampfung durch Aufbringen eines Strahles.

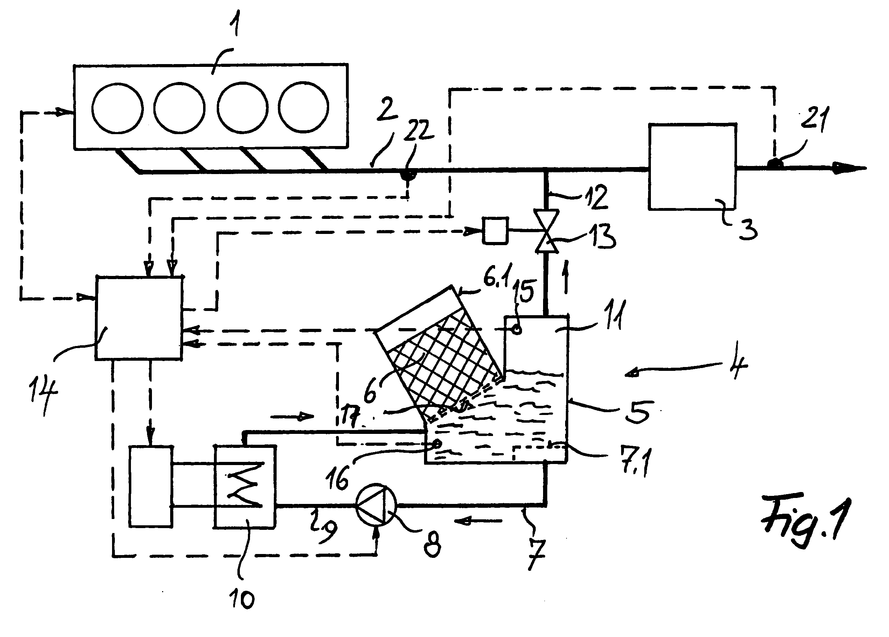

Gem. Fig. 1 ist an einer Kolbenbrennkraftmaschine 1, beispielsweise einem Dieselmotor oder einem Ottomotor mit Kraftstoffdirekteinspritzung eine Abgasleitung 2 für die sauerstoffhaltigen Abgase mit einer Katalysatoreinrichtung 3 verbunden. Die Katalysatoreinrichtung 3 setzt nach dem Prinzip der selektiven katalytischen Reduktion die im Abgas enthaltenen Stickoxide, d. h. NO und NO₂ in molekularen Stickstoff (N₂), Kohlendioxid (CO₂) und Wasser (H₂O) und zwar durch die Zufuhr eines stickstoffhaltigen Reduktionsmittels, aus dem Ammoniak (NH₃) generiert wird. Für diese Reduktion sind im Katalysator 3 jedoch nur kleine Mengen erforderlich, so daß bei hochdynamisch betriebenen Kolbenbrennkraftmaschinen im mobilen Einsatz mit stark schwankenden Lastanforderungen und damit stark schwankendem Stickoxidausstoß eine schnelle Regelbarkeit in der Zudosierung möglich sein muß.

Bei dem in Fig. 1 dargestellten Ausführungsbeispiel ist eine Einrichtung 4 zur Erzeugung eines gasförmigen Reduktionsmittels aus einem festen Reduktionsmittel vorgesehen, die im wesentlichen einen druckdicht verschlossenen Aufnahmebehälter 5 aufweist, in den ein Preßkörper 6 eines festen Reduktionsmittels angeordnet ist. Der Aufnahmebehälter 5 steht über eine Saugleitung 7 mit einer Pumpe 8 in Verbindung, deren Druckleitung 9 über einen Wärmetauscher als Erhitzer 10 in den Aufnahmebehälter 5 zurückgeführt ist. Der Wärmetauscher 10 kann elektrisch und/oder über Motorabwärme, beispielsweise Abgaswärme beheizbar sein.

Mit Hilfe der Pumpe 8 wird ein flüssiges Wärmeträgermittel im Kreislauf umgepumpt, das über den Wärmetauscher 10 aufgeheizt und mit einem Teil der Oberfläche des aus dem Reduktionsmittel gebildeten Preßkörpers 6 als Kontaktfläche in Berührung gebracht wird. Schematisch ist hier ein Eintauchen angedeutet. Die Schrägstellung der Kontaktoberfläche begünstigt das Abströmen des erzeugten Gases.

Die Art des Wärmeträgermittels ist auf das eingesetzte Reduktionsmittels abgestimmt. Grundvoraussetzung ist hierbei, daß die Verdampfungstemperatur für das Wärmeträgermittel deutlich oberhalb der Verdampfungstemperatur für das verwendete Reduktionsmittel liegt. Das Wärmeträgermittel muß des weiteren so ausgewählt werden, daß das verwendete Reduktionsmittel darin praktisch nicht löslich ist. Bei einer derartigen "Paarung" ist es dann möglich, das Wärmeträgermittel so aufzuheizen, daß seine Temperatur nur geringfügig oberhalb der erforderlichen Verdampfungstemperatur für das Reduktionsmittel liegt und dementsprechend infolge der guten Wärmeübertragung die Verdampfung innerhalb eines engen Toleranzfeldes für die einzustellende Temperatur geführt werden kann und so beispielsweise eine chemische bzw. chemisch-physikalische Reaktion des Reduktionsmittels bei zu hoher Temperatur, wie beispielsweise eine Polymerisation zu unterbinden.

Das an der Kontaktfläche verdampfende Reduktionsmittel sammelt sich oberhalb des Flüssigkeitsspiegels in einem Gassammelraum 11 des Aufnahmebehälters 5 und kann von dort aus über eine Zuleitung 12 in die Abgasleitung 2 eindosiert werden.

Die Dosierung erfolgt über ein steuerbares Dosierventil, das über eine Steuereinrichtung ansteuerbar ist, die einen Teil der Motorsteuerung 14 bildet.

Der Saugleitung 7 ist ein Auffangmittel 7.1 vorgeschaltet, durch das sich ablösende Feststoffteilchen zurückgehalten werden können.

Als Pumpe 8 können beispielsweise eine Zahnradpumpe oder auch eine Membranpumpe verwendet werden. Membranpumpen sind praktisch unempfindlich gegen Feststoffpartikel in der zu fördernden Flüssigkeit.

Der Druck im Aufnahmeraum 11 wird über einen Drucksensor 15 erfaßt, während die Temperatur des flüssigen Wärmetauschermittels über einen Temperaturfühler 16 erfaßt wird. Druck und Temperatur sind auf die Steuereinrichtung 14 aufgeschaltet, so daß unter Berücksichtigung der Temperatur die Heizeinrichtung 10 entsprechend angesteuert werden kann und zum anderen unter Berücksichtigung des Vordruckes das Dosierventil 13 entsprechend angesteuert werden kann, um die erforderlichen Mengen an gasförmigem Reduktionsmittel in die Abgasleitung 2 einzuleiten. Die Pumpe 8 kann für eine konstante Förderleistung oder aber auch für eine regelbare Förderleistung ausgelegt sein, so daß zusätzlich zur Temperaturführung am Erhitzer 10 auch über die Förderleistung der Pumpe 8 eine Regulierung der Wärmemenge und damit der erzeugten Gasmenge möglich ist.

Der Preßkörper 6 ist durch einen sieb- oder gitterartigen Trägerelement 17 gehalten, so daß ein unmittelbarer Kontakt mit dem flüssigen Wärmeträgermittel gewährleistet ist. Der Preßkörper 6 kann entsprechend der an der Kontaktfläche verdampften Menge unter Schwerkrafteinfluß absinken. Durch eine hier nicht näher dargestellte Bypaßleitung und einen Zwischenbehälter ist es außerdem möglich, im Ausnahmebehälter 5 das Niveau des Wärmeträgermittels abzusenken, so daß der Preßkörper 6 mit seiner Kontaktfläche in kurzer Zeit vom Kontakt mit dem Wärmeträgermittel gelöst werden kann, so daß bei weiterhin heißem Wärmeträgermittel die Erzeugung von gasförmigem Reduktionsmittel beendet und bei Bedarf auch wieder "zugeschaltet" werden kann. Es ist aber auch möglich, über eine entsprechende Mechanik den Preßkörper 6 anzuheben und so den Kontakt mit dem Wärmeträgermittel zu unterbrechen.

Der Preßkörper 6 ist zweckmäßigerweise in einem eigenständigen Aufnahmebehälter 6.1 angeordnet, der eine wärmeisolierung aufweist. Dies bietet den Vorteil, daß bei reversiblen Reaktionen, wie sie beispielsweise bei der Zersetzung von Ammoniumcarbamat in Ammoniak und Kohlendioxid auftreten können, eine Rückreaktion der gasförmigen Reduktionsmittelbestandteilchen in festes Ammoniumcarbamat während Stillstandphasen erfolgen kann. Da das Behältnis selbst nicht erhitzt wird, kann es auch als Schnellwechselkatusche ausgebildet sein, die durch Aufstecken oder Aufschrauben auf den Aufnahmebehälter 5 mit diesem verbunden werden kann. Damit ist es auch möglich, einen größeren Vorrat in Form einer Kartuschenbatterie vorzusehen, wobei die Kartuschen neben- oder auch übereinander gesetzt werden können, um möglichst lange Betriebszeiträume abzudecken und das Gewicht der einzelnen Kartusche zu reduzieren.

Der in Fig. 1 angegebene, über den Druckfühler 15 und die Steuereinrichtung 14 vorgegebenen Druckregelkreis erlaubt einen definierten Überdruck im Gassammelraum 11 vorzuhalten. Ein relativer Überdruck von beispielsweise 300 bis 500 mbar über dem Druck in der Abgasleitung 2 ist ausreichend, um ein dosierendes Zuströmen des gasförmigen Reduktionsmittels zu ermöglichen und gleichzeitig über eine entsprechende Regelung des Mengenstroms an Wärmeträgermittel einen entsprechenden Vordruck in den Aufnahmeraum durch eine entsprechende Gaserzeugung aufrechtzuerhalten.

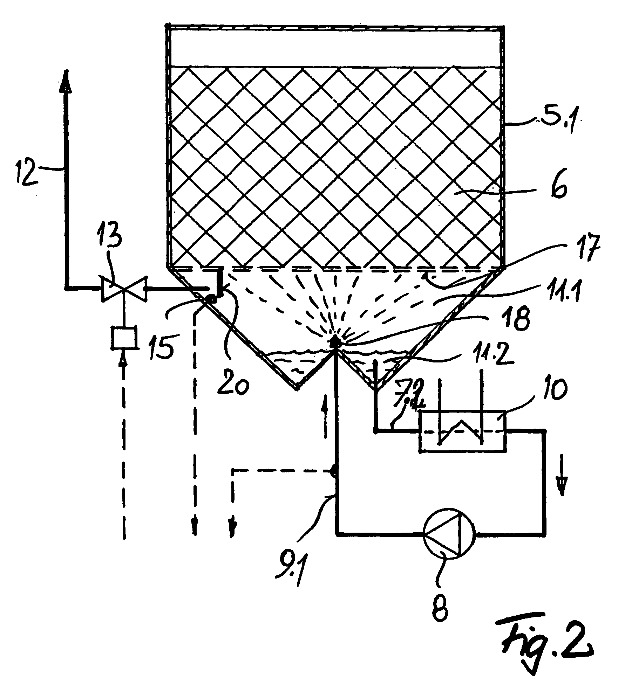

Während bei dem Ausführungsbeispiel gemäß Fig. 1 der Kontakt zwischen dem Reduktionsmittel und dem Wärmeträgermittel über ein Umspülen bzw. Eintauchen erfolgt, ist in Fig. 2 eine abgewandelte Ausführungsform für den Aufnahmebehälter 5.1 dargestellt. Bei dieser Ausführungsform kann der Preßkörper 6 wiederum auf einem flüssigkeitsdurchlässigen Trägerelement 17 in Form eines Siebes oder dergl. gehalten werden. Unterhalb des Siebes mündet die Druckleitung 9.1 der Pumpe 8 ein, die über die Saugleitung 7.2 mit einem Flüssigkeitssammelraum 11.2 des Aufnahmeraums 11.1 in Verbindung steht. Bei dem hier dargestellten Ausführungsbeispiel ist die Heizeinrichtung 10 auf der Saugseite der Pumpe 8 angeordnet. Der Flüssigkeitssammelraum 11.2 ist als Pumpensumpf ausgestaltet. Reduktionsmittelteilchen sinken zum Boden ab und können verdampfen, werden aber nicht abgesaugt.

Die druckseitige Zuleitung 9.1 mündet in den Aufnahmeraum 11.1 über eine Düse 18, durch die das flüssige Wärmeträgermittel in einen gefächerten Sprühstrahl oder Vollstrahl auf die dem Trägerelement 17 aufliegende und als Kontaktfläche dienende Oberfläche des Preßkörpers 6 aufgesprüht wird. Das entstehende Gas wird wiederum über eine Zuleitung 12 und ein vorgeschaltetes Dosierventil 13 dosierend abgezogen und in die Abgasleitung 3 der Kolbenbrennkraftmaschine eingeleitet.

Bei diesem Ausführungsbeispiel ist der Erhitzer 10 auf der Saugseite der Pumpe angeordnet, so daß etwa mitgerissene Reduktionsmittelteilchen vor Erreichen der Pumpe 8 verdampft werden und so die Pumpe nicht beschädigen können.

Beim Eintauchen bzw. Umspülen der Kontaktfläche des Preßkörpers 6 durch das Wärmeträgermittel, wie in Fig. 1 dargestellt, oder beim Aufbringen des Wärmeträgermittels auf die Kontaktfläche des Preßkörpers 6 durch einen Voll- oder Sprühstrahl, wie in Fig. 2 dargestellt, ergibt sich ein inniger Kontakt zwischen dem Wärmeträgermittel und der Kontaktfläche des Preßkörpers 6, so daß hier ein besonders guter Wärmeübergang und damit eine einwandfreie Erhitzung und Verdampfung des Reduktionsmittels bewirkt werden kann, ohne daß hier eine zulässige Temperaturobergrenze überschritten werden muß. Hierbei wird mit Vorteil ausgenutzt, daß ein Preßkörper aus dem hier einzusetzenden Reduktionsmittel selbst eine schlechte Wärmeleitfähigkeit aufweist, so daß trotz der ständigen Aufheizung der Kontaktfläche schädliche Reaktionen bereits in geringem Abstand zur Kontaktfläche im Preßkörper nicht mehr auftreten können.

Die Verwendung des Reduktionsmittels in Form eines Preßkörpers erlaubt eine kompakte kleinbauende Einrichtung, wie sie insgesondere zur Verwendung in Kraftfahrzeugen wünschenswert ist. Der innige Kontakt zwischen einem festen Reduktionsmittel und einem flüssigen Wärmeträgermittel erlaubt jedoch auch die Zufuhr eines feinteiligen Reduktionsmittels in Form eines Granulates oder Pulvers in ein entsprechendes Wärmeträgerbad, in dem dann die Verdampfung erfolgt. Eine derartige Einrichtung benötigt allerdings eine dosierende Zufuhreinrichtung für das feinteilige Reduktionsmittel.

In beiden Fällen wird ferner mit Vorteil ausgenutzt, daß die Wärme praktisch "punktuell" zur Verfügung gestellt wird und die Verdampfung nur über den unmittelbaren Kontakt zwischen dem Wärmeträgermittel und dem Reduktiosmittel auf der Kontaktfläche bewirkt wird. Der Reduktionsmittelbehälter selbst braucht nicht beheizt zu werden. Das gasförmig vorliegenden Reduktionsmittel kann in einem Gassammelraum im Aufnahmebehälter gesammelt werden, wobei ein besonderes Gasvorlagebehältnis nicht notwendig ist. Über die "punktuelle" Wärmezufuhr stellt sich im Gassammelraum ein hoher Dampfdruck ein, der zudem über die Mengenregulierung des flüssigen wärmeträgers einstellbar ist.

Als Reduktionsmittel können für den hier vorgesehenen Einsatzfall zur Stickoxidverminderung bei Abgasen von Kolbenbrennkraftmaschen stickstoffhaltige Substanzen, wie beispielsweise Harnstoff, Cyanursäure oder Melamin verwendet werden. Da die Verdampfungstemperatur für die vorstehend genannten Reduktionsmittel sehr hoch einzustufen ist (Cyanursäure mit 327°C; Melamin mit 354°C; Harnstoff mit 134°C), können als Wärmeträger auch Metalle mit niedrigen Schmelzpunkten, beispielsweise Wismut, eingesetzt werden, das eine Schmelztemperatur von 270°C besitzt. Da Metalle beim Erkalten erstarren, ist das vorbeschriebene Tauchen vorzuziehen. Es bedarf dann keiner Pumpe sondern nur eines beheizbaren Bades, in das der Preßkörper eingetaucht oder rieselförmiges Reduktionsmittel aufgebracht wird.

Bevorzugt werden jedoch solche festen stickstoffhaltigen Reduktionsmittel, die bei niedriger Verdampfungstemperatur bereits während der Verdampfung sich direkt in reduktive Bestandteile, wie Ammoniak (NH₃) zersetzen. Dies ist bei Ammoniumcarbamat gegeben, wie beispielsweise Ammoniumsalzen, Ammoniumcarbonat, Ammonium-Formiate, Ammonium-Acetate und Ammonium-Propionate. Ammoniumcarbamat hat beispielwesie eine Verdampfungs- bzw. Zersetzungstemperatur von nur 60°C. Bei der Verwendung derartiger Ammoniumsalze können in vorteilhafter Weise sogenannte Wärmeträgeröle als Wärmeträgermittel eingesetzt werden. Die Verdampfungstemperaturen bei derartigen Wärmeträgerölen liegen weit oberhalb der erforderlichen Verdampfungstemperatur von 60°C, so daß bei den hier vorzugebenden Temperaturen für das Wärmeträgeröl das Wärmeträgermittel selbst nicht verdampft.

Zur Verdampfung von Ammoniumsalzen sind Wärmeträgeröle auf Basis von Benzyltoluol, Dibenzyltoluol einzeln oder in Gemischen einsetzbar, die erst bei einer Erhitzung auf über 180°C verdampfen. Diese sind auch bei Erkalten pumpfähig. Bei der in Fig. 2 dargestellten Beaufschlagung des Preßkörpers 6 mit dem Wärmeträgermittel durch einen Sprühstrahl ist es zweckmäßig, wenn der Mündung der Zuleitung 12 in den Aufnahmeraum 11.1 ein Tropfenabscheider 20 in Formes eines Siebes oder dergl. vorgeschaltet ist, durch den der Abzug von Wärmeträgertropfen durch die Zuleitung 12 weitgehend vermieden wird. Sollten dennoch in unerwarteter Weise, beispielsweise aufgrund eines Defektes des Abscheiders 20 Wärmeträgeröltropfen mitgerissen werden, wird der aus Kohlenwasserstoffen festehende Wärmeträger am Katalysator zu Wasser und Kohlendioxid umgewandelt und gelangt so nicht in die Umwelt.

Über einen entsprechende Sensor 21 in der Abgasleitung 2 hinter dem Katalysator 3 kann die Zufuhr an gasförmigem Reduktionsmittel überwacht werden. Die hier erfaßte Menge sollte möglichst "Null" sein. Dies kann beispielsweise mit einem Ammoniak-Sensor erfaßt werden. Im übrigen kann über einen Stickoxid-Sensor 22 in der Abgasleitung 2 vor dem Katalysator 3 die zuzuführende Menge an gasförmigem Reduktionsmittel in Abhängigkeit vom Stickoxidgehalt und damit in Abhängigkeit vom Lastzustand der Kolbenbrennkraftmaschine 1 geregelt werden. Die Zuleitung 12 und das Dosierventil 13 werden zweckmäßigerweise mit einer Wärmeisolierung versehen und sind zweckmäßigerweise beheizbar, um die Kondensation von gasförmigen Reduktionsmitteln zu verhindern. Bei der Verwendung eines gut wärmeleitenden Werkstoffs für die Zuleitung 12 kann auf eine gesonderte Heizeinrichtung verzichtet werden, da die Abwärme der Abgasanlage im Betrieb ausreicht, um Kondensationen zu vermeiden.

## Patentansprüche

1. Verfahren zur Erzeugung eines gasförmigen Reduktionsmittels für die Reduktion von Stickoxiden in sauerstoffhaltigen Abgasen, insbesondere Abgasen von Verbrennungsmotoren, die einer selektiv-katalytischen Nachbehandlung in einem Katalysator unterzogen werden, **dadurch gekennzeichnet, daß** ein festes Reduktionsmittel mit einem flüssigen Wärmeträgermittel in Kontakt gebracht wird, das auf eine Heiztemperatur erhitzt ist, die im Bereich der Verdampfungstemperatur des Reduktionsmittels liegt.

2. Verfahren nach Anspruch 1, **dadurch gekennzeichnet, daß** ein Wärmeträgermittel verwendet wird, dessen Verdampfungstemperatur über der für die Verdampfung des Reduktionsmittels notwendigen Heiztemperatur liegt.

3. Verfahren nach Anspruch 1 oder 2, **dadurch gekennzeichnet, daß** ein Wärmeträgermittel verwendet wird, in dem das Reduktionsmittel allenfalls geringfügig lösbar ist.

4. Verfahren nach einem der Ansprüche 1 bis 3, **dadurch gekennzeichnet, daß** das Reduktionsmittel als Preßkörper eingesetzt wird, dessen Oberfläche zumindest zum Teil als Kontaktfläche für das heiße Wärmeträgermittel dient.

5. Verfahren nach einem der Ansprüche 1 bis 4, **dadurch gekennzeichnet, daß** das heiße Wärmeträgermittel die Kontaktfläche umspült.

6. Verfahren nach einem der Ansprüche 1 bis 5, **dadurch gekennzeichnet, daß** das heiße Wärmeträgermittel auf die Kontaktfläche als Strahl aufgebracht wird.

7. Verfahren nach einem der Ansprüche 1 bis 6, **dadurch gekennzeichnet, daß** das heiße Wärmeträgermittel als Vollstrahl auf die Kontaktfläche aufgebracht wird.

8. Verfahren nach einem der Ansprüche 1 bis 6, **dadurch gekennzeichnet, daß** das heiße Wärmeträgermittel als Sprühstrahl auf die Kontaktfläche aufgebracht wird.

9. Verfahren nach einem der Ansprüche 1 bis 8, **dadurch gekennzeichnet, daß** das entstehende gasförmige Reduktionsmittel in einem Gassammelraum gehalten und aus diesem dosiert in den zu behandelnden Abgasstrom eingeleitet wird.

10. Verfahren nach einem der Ansprüche 1 bis 9, **dadurch gekennzeichnet, daß** das Wäremträgermittel mittels einer Pumpe über einen Erhitzer, die Kontaktfläche und einen Auffangraum im Kreislauf gefördert wird.

11. Verfahren nach einem der Ansprüche 1 bis 10, **dadurch gekennzeichnet, daß** die Förderleistung der Pumpe und/oder die Heizleistung des Erhitzers und/oder die dem Abgas zuzudosierende Reduktionsmittelmenge mittels einer Steuereinrichtung steuerbar ist.

12. Einrichtung zur Erzeugung eines gasförmigen Reduktionsmittels für die Reduktion von Stickoxiden in sauerstoffhaltigen Abgasen, insbesondere Abgasen von Verbrennungsmotoren, die einer selektiv-katalytischen Nachbehandlung unterzogen werden, insbesondere Einrichtung zur Durchführung des Verfahrens nach den Ansprüchen 1 bis 11, mit einem druckdicht verschließbaren Aufnahmebehälter (5) für ein festes Reduktionsmittel, mit einer Pumpe (8), die mit ihrer Saugseite (7) und ihrer Druckseite (9) mit dem Aufnahmebehälter (5) in Verbindung steht und durch die ein flüssiges Wärmeträgermittel im Kreislauf umgepumpt wird, ferner mit einem der Pumpe (8) zugeordneten Erhitzer (10) für das Wärmeträgermittel sowie mit Mitteln, die das heiße Wärmeträgermittel mit dem Reduktionsmittel (6) in Kontakt bringen und mit einem steuerbaren Dosierventil (13) zur Einleitung des erzeugten gasförmigen Reduktionsmittels in den Abgasstrom.

13. Einrichtung nach Anspruch 12, **dadurch gekennzeichnet, daß** die Pumpe (8) und/oder der Erhitzer (10) und/oder das Dosierventil (13) mit einer Steuereinrichtung (14) zur Ansteuerung in Abhängigkeit von der jeweiligen Motorleistung in Verbindung stehen.

14. Einrichtung nach Anspruch 12 oder 13, **dadurch gekennzeichnet, daß** zumindest ein Teil der Preßkörperoberfläche in das Wärmeträgermittel eintauchbar angeordnet ist.

15. Einrichtung nach einem der Ansprüche 12 bis 14, **dadurch gekennzeichnet, daß** die Pumpe (8) druckseitig über eine Druckzuleitung (9) mit dem Aufnahmebehälter (5) verbunden ist, deren Austrittsöffnung (18) gegen die Preßkörperoberfläche gerichtet und als Düse ausgebildet ist.

16. Einrichtung nach einem der Ansprüche 12 bis 15, **dadurch gekennzeichnet, daß** die Pumpe (8) saugseitig mit einem dem Aufnahmebehälter zugeordneten Auffangraum (11.2) für das Wäremträgermittel über eine Saugleitung (7.2) verbunden ist.

17. Einrichtung nach einem der Ansprüche 12 bis 16, **dadurch gekennzeichnet, daß** der Einmündung der Saugleitung (7.2) im Auffangsraum Mittel (7.1) zum Rückhalten von Feststoffteilchen zugeordnet sind.

18. Einrichtung nach einem der Ansprüche 12 bis 17, **dadurch gekennzeichnet, daß** dem Preßkörper (6) an seiner Kontaktoberfläche für das Wärmeträgermittel ein für das Wärmeträgermittel durchlässiges Stützmittel (17) zugeordnet ist.

19. Einrichtung nach einem der Ansprüche 12 bis 18, **dadurch gekennzeichnet, daß** das Dosierventil (13) beheizbar ausgebildet ist.

## Claims

1. Method of producing a gaseous reducing agent for the reduction of nitrogen oxides in exhaust gases which contain oxygen, in particular exhaust gases from internal combustion engines, and which undergo a selective-catalytic secondary treatment in a catalytic converter,
**characterised in that**
a solid reducing agent is brought into contact with a liquid heat transfer agent that is heated to a temperature which falls within the range of the evaporation temperature of the reducing agent.

2. Method as in claim 1,
**characterised in that**
a heat transfer agent is used, the evaporation temperature of which is greater than the temperature necessary for the evaporation of the reducing agent.

3. Method as in claim 1 or 2,
**characterised in that**
a heat transfer agent is used in which the reducing agent is at most slightly soluble.

4. Method as in one of claims 1 to 3,
**characterised in that**
the reducing agent is used in the form of a pressed body, the surface of which acts at least partly as the contact surface for the hot heat transfer agent.

5. Method as in one of claims 1 to 4,
**characterised in that**
the hot heat transfer agent washes around the contact surface.

6. Method as in one of claims 1 to 5,
**characterised in that**
the hot heat transfer agent is applied to the contact surface in the form of a jet.

7. Method as in one of claims 1 to 6,
**characterised in that**
the hot heat transfer agent is applied to the contact surface in the form of a full jet.

8. Method as in one of claims 1 to 6,
**characterised in that**
the hot heat transfer agent is applied to the contact surface in the form of a spray jet.

9. Method as in one of claims 1 to 8,
**characterised in that**
the gaseous reducing agent that is formed is held in a gas collecting chamber and from there is measured out into the exhaust gas stream that is to be treated.

10. Method as in one of claims 1 to 9,
**characterised in that**
the heat transfer agent is conveyed in a circular loop by means of a pump across a heater, the contact surface and a collecting chamber.

11. Method as in one of claims 1 to 10,
**characterised in that**
the capacity of the pump and / or the heat output of the heater and / or the amount of the reducing agent to be measured out into the exhaust gas can be controlled by means of a control device.

12. Device for producing a gaseous reducing agent for the reduction of nitrogen oxides in exhaust gases which contain oxygen, in particular exhaust gases from internal combustion engines, and which undergo a selective-catalytic secondary treatment in a catalytic converter, in particular a device for carrying out the method as given in claims 1 to 11, with a pressure-tight sealable receptacle (5) for a solid reducing agent, with a pump (8) which is connected to the receptacle (5) at its intake side (7) and delivery side (9) and by means of which a liquid heat transfer agent is pumped in circulation, also with a heater (10), which is assigned to the pump (8), for the heat transfer agent, and also with means of bringing the hot heat transfer agent into contact with the reducing agent (6) and with a controllable metering valve (13) for introducing the gaseous reducing agent that is formed into the stream of the exhaust gas.

13. Device as in claim 12,
**characterised in that**
the pump (8) and / or the heater (10) and / or the metering valve (13) are connected to a control device (14) for actuation as a function of the respective engine output.

14. Device as in claim 12 or 13,
**characterised in that**
at least part of the surface of the pressed body is positioned so as to be immersed in the heat transfer agent.

15. Device as in one of claims 12 to 14,
**characterised in that**
the pump (8) is connected at the delivery side to the receptacle (5) by means of a pressure feed pipe (9), the outlet opening (18) of which is directed against the surface of the pressed body and is made in the form of a nozzle.

16. Device as in one of claims 12 to 15,
**characterised in that**
the pump (8) is connected at the intake side, by means of a suction pipe (7.2), to a collecting chamber (11.2) for the heat transfer agent, the chamber being assigned to the receptacle.

17. Device as in one of claims 1 to 16,
**characterised in that**
the opening of the suction pipe (7.2) in the collecting chamber is provided with a means (7.1) of holding back solid particles.

18. Device as in one of claims 12 to 17,
**characterised in that**
the pressed body (6) is provided, on its contact surface for the heat transfer agent, with a supporting means (17) that is permeable to the heat transfer agent.

19. Device as in one of claims 12 to 18,
**characterised in that**
the metering valve (13) is made so that it can be heated.

## Revendications

1. Procédé pour la production d'un agent réducteur gazeux pour la réduction des oxydes d'azote dans des gaz d'échappement contenant de l'oxygène, en particulier des gaz d'échappement de moteurs à combustion interne, qui sont soumis à un retraitement catalytique - sélectif dans un pot catalytique, **caractérisé en ce qu'**un agent réducteur solide est mis en contact avec un agent caloporteur liquide, qui est chauffé à une température qui est de l'ordre de la température de vaporisation de l'agent réducteur.

2. Procédé selon la revendication 1, **caractérisé en ce qu'**on utilise un agent caloporteur dont la température de vaporisation est supérieure à la température de chauffage nécessaire pour la vaporisation de l'agent réducteur.

3. Procédé selon la revendication 1 ou 2, **caractérisé en ce qu'**on utilise un agent caloporteur dans lequel l'agent réducteur est, éventuellement, très légèrement soluble.

4. Procédé selon l'une quelconque des revendications 1 à 3, **caractérisé en ce que** l'agent réducteur est utilisé sous forme de corps comprimé dont la surface sert, tout au moins en partie, de surface de contact pour l'agent caloporteur chaud.

5. Procédé selon l'une quelconque des revendications 1 à 4, **caractérisé en ce que** l'agent caloporteur chaud rince la surface de contact.

6. Procédé selon l'une quelconque des revendications 1 à 5, **caractérisé en ce que** l'agent caloporteur chaud est appliqué sur la surface de contact sous forme de jet.

7. Procédé selon l'une quelconque des revendications 1 à 6, **caractérisé en ce que** l'agent caloporteur chaud est appliqué sur la surface de contact sous forme de jet plein.

8. Procédé selon l'une quelconque des revendications 1 à 6, **caractérisé en ce que** l'agent caloporteur chaud est appliqué sur la surface de contact sous forme de jet pulvérisé.

9. Procédé selon l'une quelconque des revendications 1 à 8, **caractérisé en ce** l'agent réducteur gazeux formé est maintenu dans un espace d'accumulation de gaz et est introduit, en quantité dosée, à partir de ce dernier, dans le courant de gaz d'échappement à traiter.

10. Procédé selon l'une quelconque des revendications 1 à 9, **caractérisé en ce que** l'agent caloporteur est transporté en circuit fermé au moyen d'une pompe qui le fait passer par un réchauffeur, la surface de contact et un espace récepteur.

11. Procédé selon l'une quelconque des revendications 1 à 10, **caractérisé en ce que** le débit de la pompe et/ou la puissance de chauffage du réchauffeur et/ou la quantité d'agent réducteur à introduire dans les gaz d'échappement peuvent être commandés au moyen d'une installation de commande.

12. Installation pour la production d'un agent réducteur gazeux pour la réduction des oxydes d'azote dans des gaz d'échappement contenant de l'oxygène, en particulier des gaz d'échappement de moteurs à combustion interne, qui sont soumis à un retraitement catalytique - sélectif, en particulier installation pour la mise en oeuvre du procédé selon les revendications 1 à 11, comportant un récipient (5) pouvant être fermé de manière étanche à la pression pour un agent réducteur solide, une pompe (8) qui est en liaison avec son côté aspiration (7) et son côté refoulement (9) avec le récipient (5) et grâce à laquelle un agent caloporteur liquide est pompé en circuit fermé, en outre un réchauffeur (10) associé à la pompe (8) pour réchauffer l'agent caloporteur ainsi que des moyens qui mettent en contact l'agent caloporteur chaud avec l'agent réducteur (6) et une vanne de dosage (13) qui peut être commandée pour l'introduction de l'agent réducteur gazeux produit dans le courant de gaz d'échappement.

13. Installation selon la revendication 12, **caractérisée en ce que** la pompe (8) et/ou le réchauffeur (10) et/ou la vanne de dosage (13) sont relié(e)s à une installation de commande (14) pour la commande en fonction de la puissance du moteur.

14. Installation selon la revendication 12 ou 13, **caractérisée en ce qu'**au moins une partie de la surface du corps comprimé est disposée de manière à pouvoir être immergée dans l'agent caloporteur.

15. Installation selon l'une quelconque des revendications 12 à 14, **caractérisée en ce que** la pompe (8) est reliée côté refoulement avec le récipient récepteur (5) par l'intermédiaire d'une conduite sous pression (9) dont l'orifice de sortie (18) est orienté vers la surface du corps comprimé et est conçue en forme de buse.

16. Installation selon l'une quelconque des revendications 12 à 15, **caractérisée en ce que** la pompe (8) est reliée côté aspiration avec un espace récepteur (11.2) associé au récipient pour l'agent caloporteur, par l'intermédiaire d'une conduite d'aspiration (7.2).

17. Installation selon l'une quelconque des revendications 12 à 16, **caractérisée en ce que** des moyens (7.1) sont associés à l'embouchure de la conduite d'aspiration (7.2) dans l'espace récepteur pour retenir les particules solides.

18. Installation selon la revendication 12 ou 17, **caractérisée en ce que** le corps comprimé (6) est associé au niveau de sa surface de contact pour l'agent caloporteur, à un moyen de support (17) perméable pour l'agent caloporteur.

19. Installation selon la revendication 12 ou 18, **caractérisée en ce que** la vanne de dosage (13) peut être conçue de manière à être chauffée.
